# EUROPEAN PATENT SPECIFICATION

(11) **EP 0 689 991 B1**
(45) Date of publication and mention of the grant of the patent: **20.01.1999**
(21) Application number: 95304572.1
(22) Date of filing: 28.06.1995
(51) Int. Cl.: B64D 37/32, B60K 15/03

(54) **Improvements relating to liquid reservoirs**
Verbesserungen in Bezug auf Flüssigkeitsbehälter
Amélioration concernant les réservoirs de liquide

(30) Priority: 29.06.1994 GB 9413053
(43) Date of publication of application: 03.01.1996
(73) Proprietor: BRITISH AEROSPACE PUBLIC LIMITED COMPANY, Farnborough, Hants. GU14 6YU (GB)
(72) Inventor: Seyfang, George R., British Aerospace, Preston, Lancashire PR4 1AX (GB)
(74) Representative: Newell, William Joseph

(56) References cited:
- DE-A- 3 246 190
- DE-A- 3 918 073
- FR-A- 746 625
- GB-A- 2 155 873
- US-A- 3 787 279
- US-A- 4 615 455
- US-A- 4 702 322

## Description

This invention relates to improvements relating to liquid reservoirs such as fuel tanks and in particular to improvements designed to reduce or alleviate the problems caused by a sudden shock load applied to the reservoir.

Aircraft fuel tanks are susceptible to hydraulic shock loads generated for example when a high speed bullet or fragment impacts or penetrates the tank, thus transferring impact energy and causing overloading of the tank-wall attachments, leading to possible rupture of the tank. Although damage caused by the supersonic shockwaves caused by bullets or projectile fragments is of particular interest, it will be appreciated that damaging hydraulic shock loads may be generated in other ways.

DE 3 918 073A discloses a fuel tank arrangement which incorporates an air pillow as a safety expansion volume.

GB 2 155 873A discloses a fuel tank arrangement in which the inner surface of the fuel tank wall is provided with an air pocket structure to absorb shocks.

DE 3 246 1990A discloses a fuel tank arrangement which incorporates an intermediate space in the fuel tank to mitigate shocks.

U.S. 4 615 455 discloses a fuel tank arrangement which incorporates a compressible resilient structure to render the tank explosion resistant.

U.S. 3 787 279 discloses a fuel tank arrangement in which the tank is lined with a foam material to absorb shocks.

FR 746 625 discloses a fuel tank arrangement which incorporates an empty space or chamber to absorb shocks.

This invention provides a liquid reservoir including energy absorbing or dissipating means for at least partially absorbing or dissipating hydraulic shocks propagating in use into or within liquid in said reservoir, wherein said energy absorbing or dissipating means comprises means for introducing into said liquid a plurality of gas bubbles thereby to render the volume containing said liquid compressible.

In one embodiment, said introducing means include a storage vessel for storing pressurised gas and means operable to allow gas to pass from said vessel to be dispersed in said reservoir.

In another embodiment, said introducing means may include means for bleeding in use a component of gas from a gas turbine powerplant.

Preferably air is introduced at a concentration of between 0.1% and 10% and more preferably about 1% volume of liquid.

The reservoir may further comprise a pocket of gas adjacent an outer wall of said reservoir, or within the reservoir. Alternatively the reservoir may comprise a distribution of cells each containing a volume of gas and capable of resiliently compressing and expanding in response to increases or decreases in liquid pressure. Thus, the cells may be generally closed spherical cells or generally hollow elongate fibres. Alternatively the reservoir may include a reticulated foam matrix.

The invention may be performed in various ways and two embodiments thereof will now be described by way of example only, reference being made to the accompanying drawings, in which:-
Figure 1 is a schematic diagram of a conventional aircraft fuel tank subject to impact by a bullet or shrapnel, and
Figure 2 is a schematic diagrams of a first embodiment of fuel tank of the invention, and
Figure 3 is a schematic diagram of a second embodiment of fuel tank of this invention.

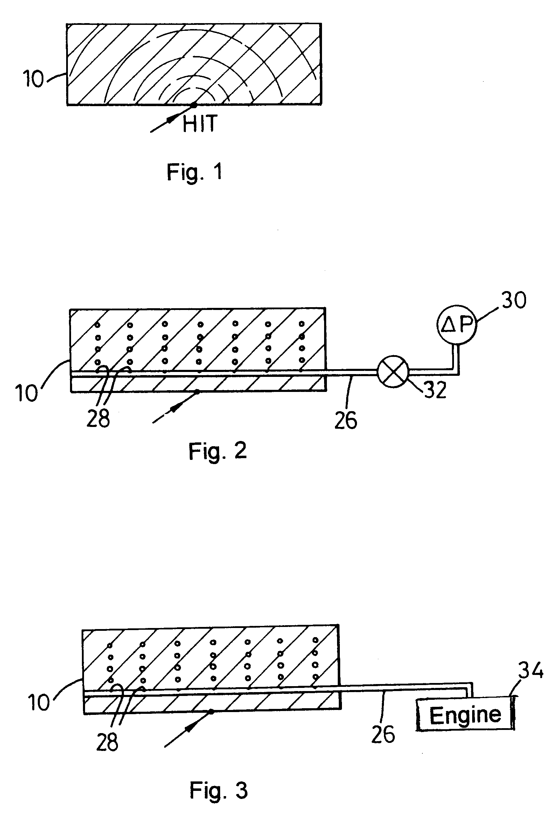

Figure 1 shows a conventional aircraft fuel tank; when hit by a bullet or shrapnel, the kinetic energy of the bullet or shrapnel is converted into a supersonic hydraulic shock wave which propagates throughout the tank, causing potential overloading of tank-wall attachments and thus rupture of the tank. If the tank is empty, it is merely penetrated, but does not suffer catastrophic failure because there is no relatively incompressible medium through which the shock wave could propagate.

In the examples of the invention given below, the fuel in the shock path between the impact point and the tank walls is rendered compressible by various measures. Fuel, like water, is almost incompressible, whereas air and fuel vapour are highly compressible. Our studies show that the inclusion of only 1% air volume into the fuel would increase its compressibility by a factor of about 100. The table below gives the compressibility ratio (βₘᵢₓ/β_{fuel})for various mixtures of air and liquid.

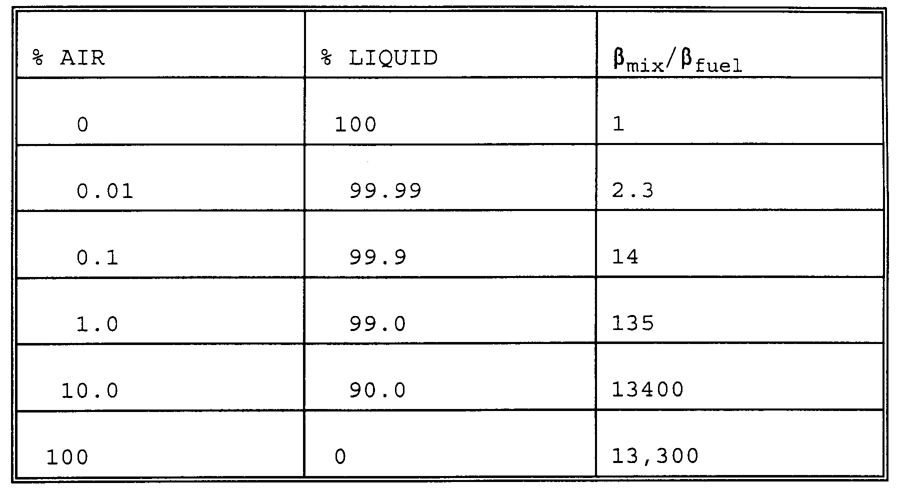

Thus for a relatively small sacrifice of capacity the compressibility can be considerably increased to a level where the shock wave set up on impact may be absorbed or dissipated without significant damage to the tank. Figures 2 and 3 show ways of increasing the compressibility of the fuel within an aircraft fuel tank 10 of generally flat shallow form, which is typical of aircraft wing box tanks.

Referring now particularly to Figures 2 and 3, a fine dispersion of gas bubbles is injected into the fuel in times of imminent or immediate risk.

In Figure 2 an aerator tube 26 extends into the fuel tank 10 and has fine holes 28 along its length through which gas may bubble into the fuel. The aerator tube is connected to a gas or air bottle 30 by means of a valve 32 which is triggered automatically by a threat proximity sensor. Alternatively the valve 32 may be operated by the pilot.

In Figure 3 the aeration tube 26 is fed from bleed air from the aircraft powerplant 34.

In these systems which incorporate active measures, there is a loss of usable fuel volume in the aircraft tanks concerned only when the system is activated and this will usually be when the aircraft tanks are not full.

It should be appreciated that the active measures embodied in Figures 2 and 3 may be combined with passive measures, as described hereabove.

## Claims

1. A liquid reservoir (10) including energy absorbing or dissipating means for at least partially absorbing or dissipating hydraulic shocks propagating in use into or within liquid in said reservoir (10) characterised in that said energy absorbing or dissipating means comprises means (26, 28, 30, 34) for introducing into said liquid a plurality of gas bubbles thereby to render the volume containing said liquid compressible.

2. A liquid reservoir according to Claim 1, wherein said means for introducing comprises a storage vessel (30) for storing pressurised gas and means (32, 26, 28) operable to allow gas to pass from said vessel (30) to be dispersed in said reservoir (10).

3. A liquid reservoir according to Claim 1, wherein said means for introducing comprises means (26, 28) for bleeding a component of gas from a gas turbine powerplant (34) and for dispersing said gas in said reservoir (10).

4. A liquid reservoir according to any of the preceding Claims, wherein said means for introducing is operable in use to introduce air into said liquid at a concentration of between 0.1% and 10% by volume.

5. A liquid reservoir according to Claim 4, wherein said air is introduced at a concentration of approximately 1% by volume.

6. A liquid reservoir according to any preceding Claim, which further includes at least one pocket of gas adjacent an outer wall of said reservoir, or within the reservoir, away from the outer walls.

7. A liquid reservoir according to any of Claims 1 to 5, further comprising a distribution of cells each containing a volume of gas and capable of resiliently compressing and expanding in response to increases or decreases in liquid pressure.

8. A liquid reservoir according to Claim 7, wherein said cells comprise at least one of generally closed spherical cells, and generally hollow elongate fibres.

9. A liquid reservoir according to any of Claims 1 to 5, which further includes a reticulated foam matrix for at least partially absorbing or dissipating hydraulic shocks within said tank.

10. An aircraft incorporating a liquid reservoir according to any preceding Claim.

11. An aircraft according to Claim 10 including means for activating the energy absorbing or dissipating means in response to a threat or perceived threat.

## Patentansprüche

1. Flüssigkeitsbehälter (10) mit Mitteln zur Absorption oder Verteilung von Energie, um wenigstens teilweise hydraulische Stöße zu dampfen oder zu verteilen, die im Gebrauch in die Flüssigkeit im Flüssigkeitsbehälter (10) eingeführt werden oder sich in dieser Flüssigkeit ausbreiten, dadurch gekennzeichnet, daß die Mittel zur Absorption oder Verteilung der Energie Einrichtungen (26, 28, 30, 34) aufweisen, um in die Flüssigkeit eine Vielzahl von Gasblasen einzuleiten, wodurch das die Flüssigkeit enthaltende Volumen kompressibel gemacht wird.

2. Flüssigkeitsbehälter nach Anspruch 1, bei welchem die Einrichtung zum Einführen von Gasblasen ein Speichergefäß (30) aufweist, um Druckgas zu speichern und daß Mittel (32, 26, 28) vorgesehen sind, die das Gas aus dem Gefäß (30) austreten lassen, um es in dem Flüssigkeitsbehälter (10) zu dispergieren.

3. Flüssigkeitsbehälter nach Anspruch 1, bei welchem die Einrichtung zum Einführen von Gas Mittel (26, 28) aufweist, um eine Gaskomponente aus einer Gasturbinenanlage (34) abzuzweigen und das Gas in dem Flüssigkeitsbehälter (10) zu dispergieren.

4. Flüssigkeitsbehälter nach einem der vorhergehenden Ansprüche, bei welchem die Einrichtung zum Einführen des Gases im Gebrauch Luft in die Flüssigkeit mit einer Konzentration zwischen 0,1 Volumenprozent und 10 Volumenprozent einführt.

5. Flüssigkeitsbehälter nach Anspruch 4, bei welchem die Luft mit einer Konzentration von etwa 1 Volumenprozent eingeführt wird.

6. Flüssigkeitsbehälter nach einem der vorhergehenden Ansprüche, bei welchem wenigstens eine Gastasche benachbart zur Außenwand des Flüssigkeitsbehälters oder innerhalb des Flüssigkeitsbehälters von den Außenseiten weg vorgesehen ist.

7. Flüssigkeitsbehälter nach einem der Ansprüche 1 bis 5, welcher außerdem eine Verteilung von Zellen aufweist, die jeweils ein Gasvolumen enthalten und in der Lage sind, gemäß einem Ansteigen oder einem Abfall im Flüssigkeitsdruck elastisch komprimiert zu werden bzw. sich elastisch auszudehnen.

8. Flüssigkeitsbehälter nach Anspruch 7, bei welchem die Zellen wenigstens eine von allgemein geschlossenen kugelförmigen Zellen und allgemein hohle langgestreckte Fasern umfassen.

9. Flüssigkeitsbehälter nach einem der Ansprüche 1 bis 5, welcher außerdem eine vernetzte Schaummatrix aufweist, um wenigstens teilweise hydraulische Stöße innerhalb des Flüssigkeitsbehälters zu absorbieren oder zu verteilen.

10. Flugzeug mit einem Flüssigkeitsbehälter nach einem der vorhergehenden Ansprüche.

11. Flugzeug nach Anspruch 10, welches Mittel aufweist, um die Einrichtung zur Absorption oder Verteilung der Energie zu aktivieren, sobald eine Bedrohung auftritt oder wahrgenommen wird.

## Revendications

1. Réservoir de liquide (10) comportant un moyen d'absorption ou de dissipation d'énergie pour absorber ou dissiper au moins partiellement des chocs hydrauliques se propageant lors de l'utilisation dans ou à l'intérieur du liquide se trouvant dans ledit réservoir (10), caractérisé en ce que ledit moyen d'absorption ou de dissipation d'énergie comprend un moyen (26, 28, 30, 34) pour introduire dans ledit liquide une pluralité de bulles de gaz afin de rendre ainsi compressible le volume contenant ledit liquide.

2. Réservoir de liquide selon la revendication 1, dans lequel ledit moyen d'introduction comprend un récipient de stockage (30) pour stocker du gaz sous pression et un moyen (32, 26, 28) ayant pour fonction de laisser passer du gaz en provenance dudit récipient (30) pour être dispersé dans ledit réservoir (10).

3. Réservoir de liquide selon la revendication 1, dans lequel ledit moyen d'introduction comprend un moyen (26, 28) pour prélever un constituant d'un gaz provenant d'une installation (34) génératrice d'énergie à turbine à gaz et pour disperser ledit gaz dans ledit réservoir (10).

4. Réservoir de liquide selon l'une quelconque des revendications précédentes, dans lequel ledit moyen d'introduction a pour fonction, lors de l'utilisation, d'introduire de l'air dans ledit liquide à une concentration comprise entre 0,1 % et 10 % en volume.

5. Réservoir de liquide selon la revendication 4, dans lequel ledit air est introduit à une concentration d'environ 1 % en volume.

6. Réservoir de liquide selon l'une quelconque des revendications précédentes, comportant en outre au moins une poche de gaz adjacente à une paroi intérieure dudit réservoir, ou à l'intérieur du réservoir, de façon éloignée des parois extérieures.

7. Réservoir de liquide selon l'une quelconque des revendications 1 à 5, comportant en outre une distribution de cellules contenant chacune un volume de gaz et capables de se comprimer et de se dilater de façon élastique en réponse à des augmentations ou des diminutions de la pression de liquide.

8. Réservoir de liquide selon la revendication 7, dans lequel lesdites cellules comprennent au moins l'une de cellules sphériques généralement fermées, et de fibres allongées généralement creuses.

9. Réservoir de liquide selon l'une quelconque des revendications 1 à 5, comportant en outre une matrice de mousse réticulée pour absorber ou dissiper au moins partiellement des chocs hydrauliques à l'intérieur dudit réservoir.

10. Aéronef comportant un réservoir de liquide selon l'une quelconque des revendications précédentes.

11. Aéronef selon la revendication 10, comportant un moyen pour activer le moyen d'absorption ou de dissipation d'énergie en réponse à une menace ou à une menace perçue.
